# EUROPÄISCHE PATENTSCHRIFT

(11) **EP 1 470 397 B1**
(45) Veröffentlichungstag und Bekanntmachung des Hinweises auf die Patenterteilung: **10.08.2005**
(21) Anmeldenummer: 03731716.1
(22) Anmeldetag: 24.01.2003
(51) Int. Cl.: G01G 11/08, G01G 13/02, B65G 53/46

(54) **VORRICHTUNG ZUM KONTINUIERLICHEN, GRAVIMETRISCHEN DOSIEREN UND PNEUMATISCHEN FÖRDERN VON SCHÜTTGUT**
DEVICE FOR THE CONTINUOUS GRAVIMETRIC METERING AND PNEUMATIC CONVEYING OF POURABLE MATERIAL
DISPOSITIF DE DOSAGE GRAVIMETRIQUE EN CONTINU ET DE CONVOYAGE PNEUMATIQUE DE MATIERE EN VRAC

(30) Priorität: 24.01.2002 DE 20201092 U
(43) Veröffentlichungstag der Anmeldung: 27.10.2004
(73) Patentinhaber: Pfister GmbH, 86165 Augsburg (DE)
(72) Erfinder: HÄFNER, Hans, Wilhelm, 86551 Aichach-Walchshofen (DE); WOLFSCHAFFNER, Hubert, 86453 Dasing (DE)
(74) Vertreter: Fiener, Josef
(86) Internationale Anmeldenummer: PCT/EP2003/000734
(87) Internationale Veröffentlichungsnummer: WO 2003/062763

(56) Entgegenhaltungen:
- EP-A- 0 588 297
- US-A- 4 154 486
- US-A- 4 682 915
- US-A- 5 255 830

## Beschreibung

Die Erfindung betrifft eine Vorrichtung zum kontinuierlichen, gravimetrischen Dosieren und pneumatischen Fördern von Schüttgut, das mit einem druckdicht in einem Gehäuse angeordneten, mit Fördertaschen versehenen Dosierrotor über eine Meßstrecke geführt wird, wobei das Gehäuse eine Schüttgutaufgabestation und eine Entleerungsstation mit Anschlüssen an Leitungen eines pneumatischen Fördersystems aufweist und mit einer Kraftmeßeinrichtung verbunden ist, über die die auf den Dosierrotor durch das geförderte Gut ausgeübte Momentanlast festgestellt wird.

Eine derartige Vorrichtung als sog. Dosierrotorwaage ist aus dem US-Patent 4,682,915 der Anmelderin bekannt. Hierbei ist ein pneumatisches Fördersystem zum "Ausblasen" der Fördertaschen des Dosierrotors vorgesehen, wobei die Zuleitung von unten her an den Dosierrotor herangeführt wird, um das Schüttgut nach oben aus den Fördertaschen zur Ableitung herauszublasen und weiterzufördern. Diese Vorrichtung hat sich grundsätzlich bewährt. Da die zur Entkoppelung notwendigen Kompensatoren in der Zu- und Ableitung sowie in der Schüttgutaufgabestation auf einer Linie mit der Schwenkachse des Dosierrotors angeordnet sind, kann es jedoch zu baulichen Problemen kommen, um diese Kompensatoren oberhalb dem Dosierrotor unterzubringen. So ist im allgemeinen der Schüttguttrichter an der Aufgabestation nach oben versetzt, um die Ableitung des pneumatischen Fördersystems ohne große Umlenkung nach oben weiterzuführen. Zudem muß zur Durchblasung von unten nach oben eine Mindest-Luftgeschwindigkeit eingehalten werden, um die erforderliche Austragung unter allen Bedingungen sicherzustellen. Dies kann bei geringen Fördermengen jedoch zu überproportionalen Luftmengen des pneumatischen Fördersystems führen.

Demzufolge liegt der Erfindung die Aufgabe zugrunde, eine Vorrichtung gemäß den oberbegrifflichen Merkmalen hinsichtlich Bau- und Installationsaufwand sowie Strömungsführung zu verbessern.

Diese Aufgabe wird gelöst durch eine Vorrichtung gemäß den Merkmalen des Anspruches 1. Bevorzugte Weiterbildungen sind Gegenstand der abhängigen Ansprüche.

Durch die Strömungsumkehr des pneumatischen Fördersystems innerhalb des Gehäuses kann die Leitungsführung des pneumatischen Fördersystems vereinfacht und kompakt gestaltet werden. So können die beiden Kompensatoren der Zuleitung und der Ableitung außerhalb des Traggerüstes der Dosierrotorwaage angeordnet werden, so daß der enge Bauraum oberhalb des Dosierrotors besser genutzt werden kann, beispielsweise durch einen tiefer angesetzten Schüttguttrichter oder eine geringere Bauhöhe des Traggerüstes. Zudem wird hierdurch die Installation und ggf. erforderliche Wartung oder Kontrolle des pneumatischen Fördersystems durch die bessere Zugänglichkeit der Bauteile erleichtert. Von besonderem Vorteil ist hierbei die verbesserte Strömungsführung in den Fördertaschen des Dosierrotors, da die Zuluftführung innerhalb des Gehäuses in dessen oberen Bereich unmittelbar über dem Dosierrotor umgekehrt wird und von oben durch die Fördertaschen gerichtet ist, so daß der Austrag des Schüttgutes auch durch die Schwerkraft unterstützt wird. Zudem ergibt sich durch die Verwirbelung bei der Luftumkehrung gerade bei geringen Fördermengen eine verbesserte Austragung aus den Fördertaschen und Überführung in die Ableitung. Außerdem wird der Energiebedarf für das pneumatische Fördersystem reduziert, da geringere Luftmengen und/oder Luftgeschwindigkeiten der Förderluft bereitzustellen sind. Weiterhin wird der Installationsaufwand reduziert, da die Strömungsumkehrelemente im Gehäuse integriert sind und nicht mehr separat montiert bzw. abgedichtet werden brauchen.

Nachfolgend wird ein Ausführungsbeispiel der Vorrichtung näher beschrieben und anhand der Zeichnungen erläutert. Hierin zeigen:
- Fig. 1: einen schematischen Querschnitt einer Dosierrotorwaage zur grundsätzlichen Erläuterung des Bauprinzips;
- Fig. 2: eine Seitenansicht auf eine Dosierrotorwaage gemäß dem Stand der Technik; und
- Fig. 3: eine vergrößerte Darstellung einer Hälfte der Dosierrotorwaage mit der erfindungsgemäßen Ausführung der Leitungsführung.

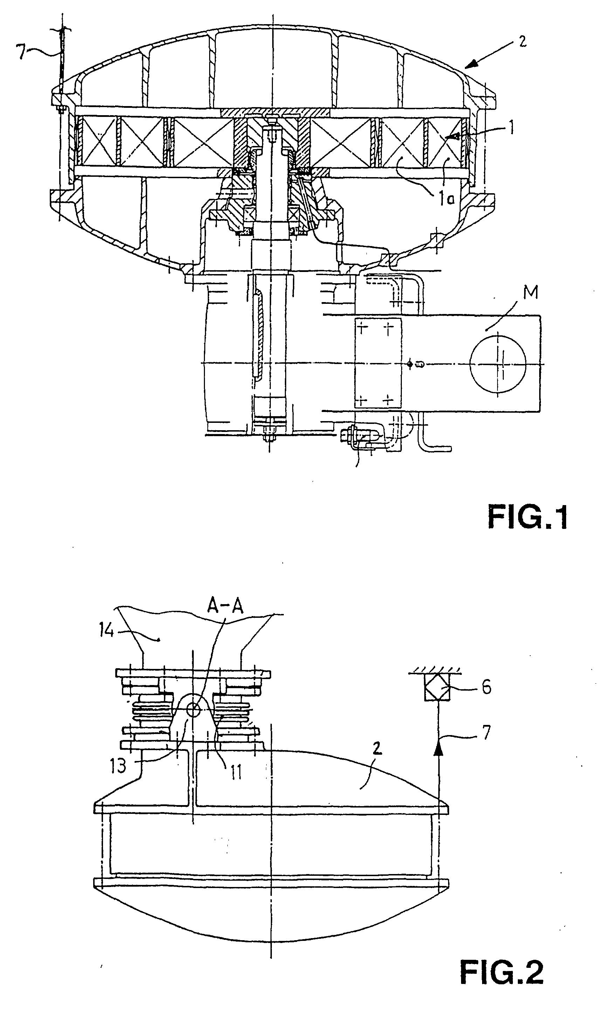

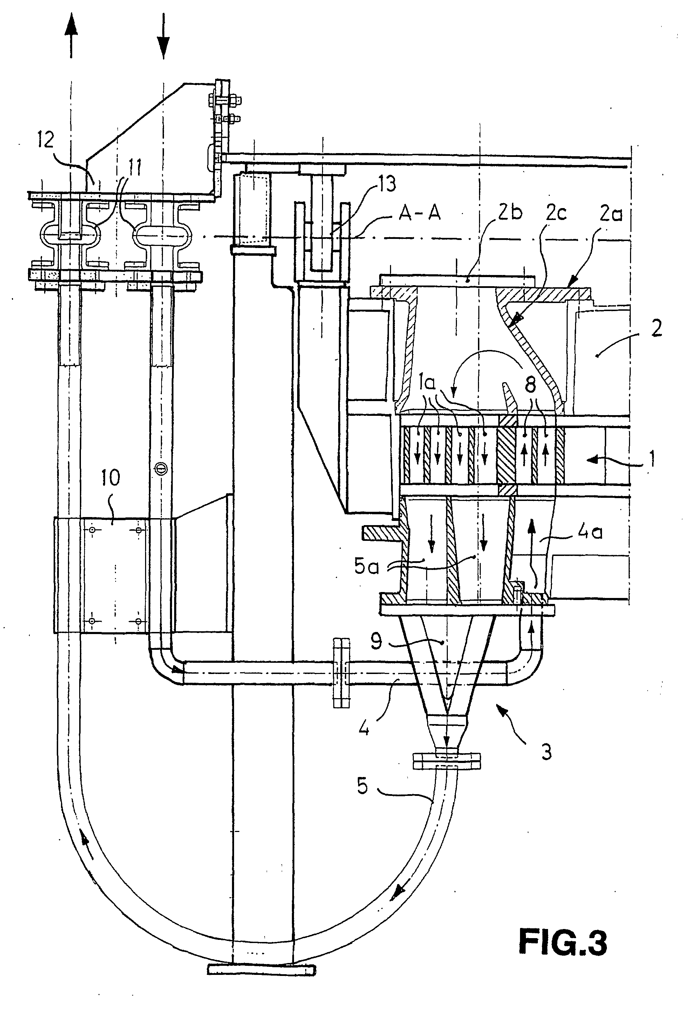

In Fig. 1 ist eine sog. Dosierrotorwaage im Querschnitt dargestellt. Diese besteht im wesentlichen aus einem Gehäuse 2 mit einem darin zwischen Dichtplatten umlaufenden Dosierrotor 1, der eine Vielzahl von Fördertaschen 1a aufweist. Der Dosierrotor 1 wird von einem regelbaren Motor M angetrieben. Die Fördertaschen 1a sind in Form von konzentrischen Ringen im Dosierrotor 1 angeordnet. Radial innenliegend sind zudem Durchlässe (8; vgl. Fig. 3) vorgesehen, die beim Stand der Technik zur Erzeugung von Sperrluft dienen. An das Gehäuse 2 ist ein pneumatisches Fördersystem mit Zu- und Ableitung angeschlossen, um somit eine Entleerungsstation zu bilden. Des weiteren ist über dem Gehäuse 2 eine Schüttgutaufgabestation 14 (vgl. Fig. 2) ausgebildet, wobei das Gehäuse 2 um eine Horizontalachse schwenkbar gelagert ist, um auf über eine davon beabstandete Aufhängung 7 auf eine Kraftmeßzelle 6 zu wirken (vgl. Fig. 2). Aufgrund der Verschwenkung um die in Fig. 2 dargestellte und durch Lager 13 gebildete Schwenkachse A-A (vgl. auch Fig. 3) ergibt sich somit die Erfassung der Momentanlast, die durch das geförderte Gut auf den Dosierrotor 1 als Meßstrecke ausgeübt wird. Zur Entkoppelung von Krafteinflüssen sind in der Zu- und Ableitung Kompensatoren vorgesehen, die zusammen mit dem Kompensator 11 an der Schüttgutaufgabestation auf der Schwenkachse A-A angeordnet sind.

In Fig. 3 ist die nunmehr vorgeschlagene, erfindungsgemäße Führung des pneumatischen Fördersystems 3 dargestellt. Hierbei sind beide Anschlüsse 4a, 5a der Zuleitung 4 bzw. der Ableitung 5 des pneumatischen Fördersystems 3 an die Unterseite des Gehäuses 2 angeschlossen. Die Zuleitung 4 führt dabei zu radial innenliegenden Durchlässen 8 im Dosierrotor 1, um direkt über diesem innerhalb des Gehäuses 2 in einem Umlenkbogen 2c wieder nach unten zu den Fördertaschen 1a geführt zu werden. Die Oberseite 2a des Gehäuses 2 ist dabei gegenüber der früheren Bauweise durch eine einfache Dichtplatte 2b verschlossen.

Durch diese Strömungsumlenkung bzw. -umkehr innerhalb des Gehäuses 2 wird die Austragung aus den Fördertaschen 1a wesentlich verbessert, da selbst bei geringen Luftgeschwindigkeiten Verwirbelungen entstehen, die den Austrag des Schüttgutes aus den Fördertaschen 1a erleichtern und insbesondere auch die Schwerkraft auf das in den Fördertaschen 1a befindliche Schüttgut wirkt. Somit kann der Austrag über die darunter befindlichen Sammeltrichter 9 und die Ableitung 5 zuverlässig erfolgen. Der Anschluß 5a ist dabei als Doppelstutzen ausgebildet und dient ebenso wie der Sammeltrichter 9 zur kontinuierlichen Überführung des Sektorquerschnittes der Fördertaschen 1a auf den Rohrquerschnitt der Ableitung 5.

Die Ableitung 5 und die Zuleitung 4 des pneumatischen Fördersystems 3 sind dabei bevorzugt seitlich über eine Klammer 10 am Traggerüst miteinander verbunden, so daß der Installationsaufwand reduziert wird. Entsprechendes gilt für die Befestigung der Kompensatoren 11 der Zuleitung 4 und der Ableitung 5 an einer gemeinsamen Konsole 12, so daß hier ebenfalls der Montageaufwand für die erforderlichen Kompensatoren 11 reduziert wird, da diese eine Installationseinheit bilden können. Somit wird der ggf. im langjährigen Einsatz erforderliche Wartungsaufwand reduziert, da die Kompensatoren 11 gut zugänglich angeordnet sind.

## Patentansprüche

1. Vorrichtung zum kontinuierlichen, gravimetrischen Dosieren und pneumatischen Fördern von Schüttgut, das mit einem druckdicht in einem Gehäuse (2) angeordneten, mit Fördertaschen (1a) versehenen Dosierrotor (1) über eine Meßstrecke geführt wird, wobei das Gehäuse (2) eine Schüttgut-Aufgabestation und eine Entleerungsstation mit Anschlüssen an Zu-/Ableitungen (4, 5) eines pneumatischen Fördersystems aufweist und mit einer Kraftmeßeinrichtung verbunden ist, über die die auf den Dosierrotor (1) durch das geförderte Gut ausgeübte Momentanlast festgestellt wird, sowie die Zuleitung und Ableitung des pneumatischen Fördersystems an die Unterseite des Gehäuses (2) angeschlossen sind,
**dadurch gekennzeichnet, daß**
die Strömungsumlenkung von der Zuleitung (4) zur Ableitung (5) innerhalb des oberen Bereiches des Gehäuses (2) angeordnet ist.

2. Vorrichtung nach Anspruch 1, **dadurch gekennzeichnet, daß** die Zuleitung (4) des pneumatischen Fördersystems (3) an radial innenliegende Durchlässe (8) im Dosierrotor (1) angeschlossen ist.

3. Vorrichtung nach Anspruch 2, **dadurch gekennzeichnet, daß** die Durchlässe (8) in Form von konzentrisch zueinander angeordneten Schächten ausgebildet sind.

4. Vorrichtung nach einem der Ansprüche 1 bis 3, **dadurch gekennzeichnet, daß**
das Gehäuse (2) an seiner Oberseite (2a) durch eine Dichtplatte (2b) verschlossen ist.

5. Vorrichtung nach einem der Ansprüche 1 bis 4, **dadurch gekennzeichnet, daß**
die Strömungsumlenkung innerhalb des Gehäuses (2) an der Entleerungsstation in Form eines Umlenkbogens (2c) ausgebildet ist.

6. Vorrichtung nach einem der Ansprüche 1 bis 5, **dadurch gekennzeichnet, daß**
die Fördertaschen (1a) des Dosierrotors (1) konzentrisch zueinander angeordnet sind.

7. Vorrichtung nach Anspruch 6, **dadurch gekennzeichnet, daß** an der Unterseite des Gehäuses (2) ein Sammeltrichter (9) zur Überführung des Querschnittes der Fördertaschen (1a) auf den Rohrquerschnitt der Ableitung (5) ausgebildet sind.

8. Vorrichtung nach einem der Ansprüche 1 bis 7, **dadurch gekennzeichnet, daß**
der Anschluß (5a) der Ableitung (5) als Doppelstutzen ausgebildet ist.

9. Vorrichtung nach einem der Ansprüche 1 bis 8, **dadurch gekennzeichnet, daß**
die Zuleitung (4) und die Ableitung (5) seitlich des Gehäuses (2) mittels einer Klammer (10) miteinander verbunden sind.

10. Vorrichtung nach einem der Ansprüche 1 bis 9, **dadurch gekennzeichnet, daß**
Kompensatoren (11) der Zuleitung (4) und der Ableitung (5) an einer gemeinsamen Konsole (12) seitlich des Gehäuses (2) befestigt sind.

## Claims

1. A device for the continuous gravimetric metering and pneumatic conveying of pourable material, which is guided using a metering rotor (1), positioned pressure-tight in a housing (2) and provided with conveyor pockets (1a), over a measuring length, the housing (2) having a pourable material delivery station and an emptying station having connections to feed/removal lines (4, 5) of a pneumatic conveyor system and being connected to a force measurement device, via which the torque load exerted on the metering rotor (1) by the material conveyed may be determined, and the feed line and removal line of the pneumatic conveyor system being connected to the bottom of the housing (2),
**characterized in that**
the flow deflection from the feed line (4) to the removal line (5) is positioned inside the upper region of the housing (2).

2. The device according to Claim 1, **characterized in that** the feed line (4) of the pneumatic conveyor system (3) is connected to radially internal openings (8) in the metering rotor (1).

3. The device according to Claim 2, **characterized in that** the openings (8) are implemented in the form of shafts, which are positioned concentrically to one another.

4. The device according to one of Claims 1 through 3, **characterized in that** the housing (2) is closed on top (2a) by a sealing plate (2b).

5. The device according to one of Claims 1 through 4, **characterized in that** the flow deflection inside the housing (2) is implemented at the emptying station in the form of a deflection curve (2c).

6. The device according to one of Claims 1 through 5, **characterized in that** the conveyor pockets (1a) of the metering rotor (1) are positioned concentrically to one another.

7. The device according to Claim 6, **characterized in that** a collection funnel (9), for transferring the cross-section of the conveyor pockets (1a) to the tubular cross-section of the removal line (5), is implemented on the bottom of the housing (2).

8. The device according to one of Claims 1 through 7, **characterized in that** the connection (5a) of the removal line (5) is implemented as a double connecting piece.

9. The device according to one of Claims 1 through 8, **characterized in that** the feed line (4) and the removal line (5) are connected to one another laterally from the housing (2) by a clamp (10).

10. The device according to one of Claims 1 through 9, **characterized in that** compensators (11) of the feed line (4) and of the removal line (5) are attached to a shared bracket (12) laterally from the housing (2).

## Revendications

1. Dispositif de dosage gravimétrique en continu et de convoyage pneumatique de matière en vrac, guidée, sur une veine de mesure, avec un rotor de dosage (1) disposé de manière étanche à la pression dans un boîtier (2) et muni de poches de convoyage (1a), le boîtier (2) présentant un poste d'alimentation en matière en vrac et un poste de vidage, avec des raccordements à des conduites d'amenée/d'évacuation (4,5) d'un système de convoyage pneumatique et étant relié à un dispositif dynamométrique, par l'intermédiaire duquel la charge momentanée, exercée sur le rotor de dosage (1) par la matière convoyée, est constatée, et la conduite d'amenée et la conduite d'évacuation du système de convoyage pneumatique étant raccordées à la face inférieure du boîtier (2),
**caractérisé en ce que**
la déviation d'écoulement de la conduite d'amenée (4) à la conduite d'évacuation (5) est disposée à l'intérieur de la zone supérieure du boîtier (2).

2. Dispositif selon la revendication 1, **caractérisé en ce que** la conduite d'amenée (4) du système de convoyage pneumatique (3) est raccordée à des passages (8) radialement intérieurs, ménagés dans le rotor de dosage (1).

3. Dispositif selon la revendication 2, **caractérisé en ce que** les passages (8) sont réalisés sous la forme de puits, disposés concentriquement les uns aux autres.

4. Dispositif selon l'une des revendications 1 à 3, **caractérisé en ce que** le boîtier (2) est fermé sur sa face supérieure (2a), par une plaque d'étanchéité (2b).

5. Dispositif selon l'une des revendications 1 à 4, **caractérisé en ce que** la déviation d'écoulement à l'intérieur du boîtier (2), sur le poste de vidage, est réalisé sous la forme d'un coude de déviation (2c).

6. Dispositif selon l'une des revendications 1 à 5, **caractérisé en ce que** les poches de convoyage (1a) du rotor de dosage (1) sont disposées concentriquement les unes aux autres.

7. Dispositif selon la revendication 6, **caractérisé en ce que**, en face inférieure du boîtier (2), est réalisé un entonnoir collecteur (9), pour faire passer la section transversale des poches de transfert (1a) à la section transversale de la conduite d'évacuation (5).

8. Dispositif selon l'une des revendications 1 à 7, **caractérisé en ce que** le raccordement (5a) de la conduite d'évacuation (5) est réalisé sous la forme de tubulure double.

9. Dispositif selon l'une des revendications 1 à 8, **caractérisé en ce que** la conduite d'amenée (4) et la conduite d'évacuation (5) sont reliées ensemble sur le côté du boîtier (2), à l'aide d'une pince de bridage (10).

10. Dispositif selon l'une des revendications 1 à 9, **caractérisé en ce que** des compensateurs (11), de la conduite d'amenée (4) et de la conduite d'évacuation (5), sont fixés sur le côté du boîtier (2), sur une console (12) commune.
